# DEMANDE DE BREVET EUROPEEN

(11) **EP 1 566 298 A2**
(43) Date de publication de la demande: **24.08.2005**
(21) Numéro de dépôt: 05101264.9
(22) Date de dépôt: 18.02.2005
(51) Int. Cl.: B60J 1/20, B60J 7/00

(54) **Dispositif d'occultation pour véhicule automobile, et véhicule correspondant**

(30) Priorité: 18.02.2004 FR 0401642
(71) Demandeur: WAGON SAS, 79302 Bressuire Cédex (FR)
(72) Inventeur: Jolivet, David, 79300 Bressuire (FR)
(74) Mandataire: Bioret, Ludovic

(57) **Abrégé**

L'invention concerne un dispositif d'occultation pour véhicule automobile mobile entre au moins deux positions, une position repliée et une position déployée.

Selon l'invention, un tel dispositif d'occultation comprend un élément d'occultation (10) réalisé dans une même pièce de matériau souple choisi de façon que dans la position déployée l'élément soit maintenu dans une forme prédéterminéee, ledit matériau utilisé participant au maintien dudit élément d'occultation dans la position déployée.

## Description

Le domaine de l'invention est celui des véhicules automobiles, et notamment des véhicules présentant une surface vitrée importante, par exemple au niveau du pavillon. Plus précisément, l'invention concerne l'occultation de telles surfaces vitrées, notamment pour se protéger des rayons du soleil.

La tendance actuelle, en matière de véhicule automobile, est de proposer de plus en plus de surfaces vitrées. Ainsi, notamment, on a proposé des véhicules présentant un pavillon équipé d'un ou plusieurs éléments vitrés. Dans certains cas, l'intégralité du pavillon est en verre ou en un matériau similaire laissant passer les rayons du soleil.

On a également proposé des surfaces vitrées multiples, par exemple sous la force de deux ou trois éléments, dont certains peuvent former toits ouvrants. De la même façon, des surfaces vitrées importantes peuvent être prévues sur d'autres parties du véhicule, et par exemple à l'arrière, notamment lorsque le véhicule est équipé d'un hayon.

On comprend qu'il est alors nécessaire de prévoir des moyens d'occultation, pour protéger l'habitacle et ses occupants du soleil. Lorsque le pavillon est équipé d'un toit ouvrant, on a pensé à l'équiper d'un volet rigide, pouvant coulisser dans le pavillon. Cette solution pourrait éventuellement être étendue au cas où plusieurs zones vitrées existent, sous réserve qu'il reste suffisamment d'espace dans le pavillon pour dissimuler les volets lorsque ceux-ci ne sont pas utilisés pour occulter la surface vitrée correspondante. Clairement, en revanche, une telle solution ne peut pas être envisagée lorsque le pavillon est intégralement, ou essentiellement, vitré.

Pour les surfaces vitrées réduites, et verticales ou sensiblement verticales, telles que les vitres arrières ou latérales du véhicule, on connaît également les stores à enrouleur, que l'on peut déployer pour se protéger du soleil. Il n'est malheureusement pas possible de transposer cette technique du store à enrouleur, et plus généralement de tous types de toiles d'occultation, à une surface de grande taille, non verticale, et qui plus est généralement non plane, tels que le sont par exemple les pavillons de véhicules actuels ou futurs.

En effet, si l'on développait horizontalement un store dont les dimensions pourraient être approximativement de 1,5 m en longueur, et de 1 m en largeur, pour occulter un pavillon vitré, la toile "pocherait", c'est-à-dire que ses bords latéraux se rapprocheraient légèrement l'un de l'autre, ce qui provoquerait un creux au centre de la toile, des plis ou des froncements, et/ou baillerait, sous l'effet de la gravité. Cela serait bien sûr inacceptable, tant en ce qui concerne le simple aspect visuel et ergonomique que pour l'efficacité de l'occultation, la lumière pouvant alors passer le long des bords.

En outre, les pavillons des véhicules sont le plus souvent non plats mais au contraire incurvés ou galbés, au moins dans le sens de la largeur et également parfois dans le sens de la longueur. À nouveau, le simple déploiement d'une toile d'occultation ne serait alors ni efficace, ni ergonomique, ni esthétique.

Une technique connue de l'art antérieur propose l'utilisation de baleines en plastique ou en métal qui maintiennent la toile d'occultation dans la position déployée souhaitée. Selon une technique connue, les baleines sont logées dans la toile en les glissant à l'intérieur de fourreaux constitués chacun par une pièce de tissu rapportée sur la toile d'occultation et solidarisée par exemple par soudure à celle-ci.

Un des inconvénients de cette technique réside dans le fait que l'encombrement d'un tel dispositif d'occultation est relativement important, notamment lorsque celui-ci est en position repliée. Une solution à ce problème a été décrite dans le document publié sous le numéro FR 2805495 déposé au même nom que la présente demande. Selon cette technique en effet, les baleines sont désolidarisées de la toile d'occultation lorsque cette dernière est repliée, un système permettant de coupler les baleines à la toile au fur et à mesure de son déploiement. Cette technique permet effectivement de réduire l'encombrement de la toile d'occultation, mais les baleines, stockées à part, restent encombrantes. Ainsi, selon les techniques connues de l'art antérieur, aucune ne présente de solution satisfaisante quant au problème d'encombrement.

Un autre inconvénient de ces techniques réside dans le fait qu'elles sont complexes et coûteuses à mettre en oeuvre. En effet, dans le cas des dispositifs d'occultation présentant des baleines glissées dans des fourreaux, leur procédé de fabrication selon lequel des pièces de tissu sont rapportées et soudées sur la toile d'occultation et les baleines ensuite glissées à l'intérieur est long et coûteux à mettre en oeuvre. Dans le cas de dispositifs comprenant des baleines se désolidarisant de la toile d'occultation, ceux-ci présentent un système de rail de guidage et des baleines spécifiques présentant un élément d'accrochage. Ces dispositifs sont donc complexes et coûteux à fabriquer et à monter.

Encore un autre inconvénient de ces techniques réside dans leur caractère inesthétique. En effet, dans le cas où les baleines sont désolidarisées de la toile d'occultation, celles-ci restent visibles dans l'habitacle de la voiture ou nécessite un logement spécifique. Dans le cas où les baleines sont glissées dans les fourreaux prévus à cet effet, la toile risque d'être « marquée » lors de l'enroulement à cause de la présence des baleines rigides.

L'invention a notamment pour objectif de pallier ces différents inconvénients de l'état de l'art.

Plus précisément, l'invention a pour objectif de fournir un dispositif d'occultation pour véhicule automobile, et par exemple pour le pavillon de ce dernier (ou plus généralement sur toute surface importante), dont l'encombrement soit le plus réduit possible, notamment lorsqu'il est replié, afm qu'il puisse être aisément monté dans le véhicule.

Un autre objectif de l'invention est de fournir un dispositif d'occultation qui soit le plus léger possible.

Encore un autre objectif de l'invention est de proposer un procédé de fabrication et de montage d'un tel dispositif d'occultation qui soit simple et peu coûteux à mettre en oeuvre.

Un autre objectif de l'invention est de fournir un tel dispositif d'occultation qui soit efficace et qui présente un aspect visuel de bonne qualité, lorsqu'il est déployé.

Ces objectifs, ainsi que d'autres qui apparaîtront par la suite, sont atteints à l'aide d'un dispositif d'occultation pour véhicule automobile, mobile entre au moins deux positions, une position repliée et une position déployée.

Selon l'invention, un tel dispositif d'occultation comprend un élément d'occultation réalisé dans une même pièce de matériau souple choisi de façon que dans ladite position déployée ledit l'élément soit maintenu dans une forme prédéterminée, ledit matériau utilisé participant au maintien de l'élément d'occultation dans la position déployée.

Ainsi, l'invention repose sur une approche tout à fait nouvelle et inventive consistant à réaliser l'élément d'occultation dans une unique pièce de matériau souple. Ainsi, lorsque le dispositif d'occultation est en position repliée, l'encombrement est considérablement réduit, et le procédé de fabrication et le montage du dispositif sont plus simples et moins coûteux à mettre en oeuvre.

Le matériau utilisé pour réaliser l'élément d'occultation est donc choisi de façon qu'il participe à son maintien dans la position déployée. En particulier, le matériau utilisé pourra par exemple être apte à prendre une forme prédéterminée dans la position déployée.

L'invention permet ainsi d'obtenir une solution particulièrement adaptée à l'occultation de surfaces de grandes dimensions d'un véhicule automobile. Il peut notamment s'agir d'un pavillon intégralement ou en grande partie vitré, ou de la vitre arrière du véhicule. Le dispositif proposé par l'invention peut également servir de cache-bagages par exemple.

Selon un premier mode de réalisation avantageux de l'invention, l'élément d'occultation est réalisé dans un matériau compressible, comme par exemple les mousses à cellules ouvertes.

Préférentiellement, le matériau utilisé pourra être choisi parmi le polyuréthanne, le polypropylène et le polystyrène. L'utilisation de ces matériaux permet de réduire le poids et, lors de l'application d'une contrainte, notamment lors du repliement et dans la position repliée du dispositif d'occultation, de réduire au maximum son encombrement. En position déployée en revanche, l'élément d'occultation est affranchi de cette contrainte et retrouve sa forme d'origine.

Selon un second mode de réalisation avantageux de l'invention, l'élément d'occultation est réalisé dans un matériau souple et incompressible (ou faiblement compressible), tout en restant bien sûr déformable.

De façon préférée, pourront être utilisés le caoutchouc, le TPE ou l'EPDM. Ces matériaux sont déformables sous la contrainte et permettent donc comme le précédent mode de réalisation d'obtenir un encombrement minimal du dispositif d'occultation en position repliée.

Selon une première approche de l'invention, l'élément d'occultation présente une épaisseur uniforme en position déployée.

Selon une seconde approche avantageuse de l'invention, l'élément d'occultation présente au moins deux zones d'épaisseur différentes dans la position déployée.

Préférentiellement, l'élément d'occultation comprend des zones longitudinales d'épaisseur supérieure et des zones longitudinales d'épaisseur inférieure. Ces zones d'épaisseur différentes peuvent s'alterner, notamment de façon régulière et être liées les unes aux autres par des zones d'épaisseur transitoire.

Ainsi, les zones d'épaisseur supérieure ont une fonction similaire à celle de baleines et permettent le maintien de l'élément d'occultation dans la forme prédéterminée souhaitée en position déployée.

Avantageusement, l'élément d'occultation est réalisé par moulage, ce qui permet une simplification et un coût moindre, non seulement du procédé de fabrication, mais également du montage et du réglage de celui-ci.

Préférentiellement, l'élément d'occultation est montée sur un tube enrouleur et le dispositif comprend des moyens pour comprimer l'élément d'occultation avant l'enroulement.

Avantageusement, les zones longitudinales d'épaisseur supérieure sont suffisamment espacées les unes des autres par les zones longitudinales d'épaisseur inférieure pour, lors du repliement, s'aplatir indépendamment les unes des autres, de façon qu'en position repliée, l'encombrement du dispositif soit minimal.

L'invention telle que présentée concerne également tout véhicule automobile comprenant un tel dispositif d'occultation.

D'autres caractéristiques et avantages de l'invention apparaîtront plus clairement à la lecture de la description suivante de plusieurs modes de réalisation préférentiels, donnés à titre de simples exemples illustratifs et non limitatifs, et des dessins annexés, parmi lesquels :
- la figure 1 présente un premier mode de réalisation de l'invention illustrant une coupe transversale d'un dispositif d'occultation comprenant un élément d'occultation réalisé dans une matière souple et d'épaisseur uniforme;
- la figure 2 présente une variante du mode de réalisation illustré par la figure 1, selon la même coupe, dans laquelle l'élément d'occultation comprend au moins deux zones d'épaisseurs différentes.

Le principe général de l'invention repose donc sur la mise en oeuvre d'un dispositif d'occultation mobile entre au moins deux positions, une position repliée et une position déployée, destiné à occulter une surface importante d'un véhicule. Il peut notamment s'agir d'un pavillon intégralement ou en grande partie vitré. L'invention peut également être utilisée pour une vitre arrière de véhicule, un cache-bagages, etc.

Selon l'invention, l'élément d'occultation est réalisé dans une matière souple choisie de façon à ce qu'en position déployée il soit maintenu dans la position souhaitée, sans « pocher » ni se déformer.

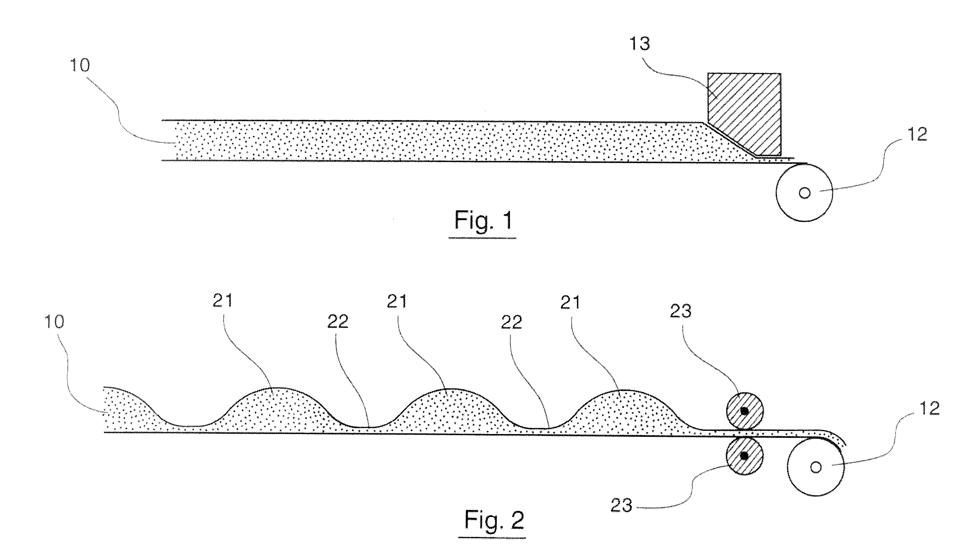

En référence à la figure 1, le dispositif comprend un élément d'occultation 10 monté sur un tube enrouleur 12. L'élément d'occultation est réalisé dans une même pièce de matériau souple et, tel qu'illustré selon ce mode de réalisation, il est plan et d'épaisseur uniforme.

Typiquement, l'élément d'occultation est réalisé par moulage. Ce mode de réalisation permet de simplifier le processus de fabrication du dispositif. En effet, l'ensemble de l'élément d'occultation étant réalisé d'une seule pièce, une seule matière première et un seul moule sont nécessaires à sa réalisation, les étapes de positionnement et de solidarisation de baleines nécessaires dans les différentes techniques de l'art antérieur n'intervenant plus.

D'autre part, ce mode de réalisation et plus généralement l'invention permet également de simplifier le montage et le réglage du dispositif dans le véhicule.

Les matériaux souples utilisés peuvent être des matériaux compressibles comme par exemple des mousses à cellules ouvertes comme les matériaux expansés de type polyuréthanne, polypropylène, polystyrène ou autres. Ces matériaux expansés peuvent également jouer le rôle d'isolant acoustique et/ou thermique du fait de l'air présent à l'intérieur, et leur utilisation permet l'obtention d'un dispositif d'occultation très léger et présentant un encombrement relativement faible en position repliée.

Lors de l'enroulement, l'ensemble de l'élément d'occultation se compresse, et lorsque la toile est déroulée, en position déployée pour l'occultation du pavillon du véhicule par exemple, l'élément d'occultation retrouve sa forme et son épaisseur d'origine et assure le maintien du dispositif.

Des moyens de compression assurant la compression lors de l'enroulement, ou juste avant, peuvent être prévus, par exemple sous la forme d'un guide fixe (13, figure 1) ou d'un ou plusieurs rouleaux (23, figure 2).

D'autres matériaux souples mais non (ou faiblement) compressibles peuvent également être envisagés. Ces matériaux sont des matériaux déformables sous une contrainte, comme par exemple le caoutchouc, le TPE (Thermo Plastique Elastomère) ou l'EPDM (Ethylène Propylène Diène Monomère).

Cette variante permet également un faible encombrement du dispositif lorsque l'élément d'occultation est en position repliée, mais assure également une durée de vie plus longue de celui-ci. En effet, lorsque qu'une matière compressible est utilisée, celle-ci risque éventuellement de voir sa compressibilité diminuer avec le temps et l'usage.

Typiquement, en fonction du matériau utilisé, l'épaisseur de l'élément d'occultation pourra varier entre 0,6 mm et 2 mm en position déployée, pour obtenir après enroulement une dimension du dispositif de l'ordre de 50 mm de diamètre dans le cas de l'occultation d'un pavillon de 1,5 m de longueur et 1 m de largeur.

D'autres formes selon lesquelles l'élément d'occultation présente une épaisseur uniforme peuvent être envisagées, comme un plan incurvé, ou une forme sinusoïdale ou autre en fonction de leur efficacité par rapport au(x) galbe(s) souhaité(s).

La figure 2 présente un autre mode de réalisation selon lequel l'élément d'occultation 10 comprend des zones longitudinales d'épaisseurs différentes. Il comprend notamment des zones d'épaisseur plus faible 22 réduites à une fine couche de matière souple alternant avec des zones longitudinales plus épaisses 21 dont la fonction est similaire à celle de baleines et permettent le maintien de l'élément d'occultation dans une forme prédéterminée en position déployée.

Ce mode de réalisation permet un encombrement plus faible de l'élément d'occultation en position repliée. En effet, la section transversale en chapeau de gendarme des zones plus épaisses facilitant leur compression lors de l'enroulement. D'autres formes (triangulaires, incurvées) sont également envisageables. De façon préférée, les zones longitudinales plus épaisses sont suffisamment espacées pour s'aplatir indépendamment les unes des autres au fur et à mesure de l'enroulement.

L'épaisseur, la largeur, la forme et l'espacement des zones longitudinales plus épaisses 21 sont choisis en fonction des caractéristiques du matériau dans lequel est réalisé l'élément d'occultation et de ses dimensions. Classiquement, dans le cas d'un pavillon, on prévoira pour les zones les plus épaisses une épaisseur pouvant varier entre 2 mm et 5 mm, et pour les zones les plus fmes une épaisseur de l'ordre de 0,6 mm, et un espacement entre les zones longitudinales les plus épaisses compris entre 15 et 25 cm.

Selon ce mode de réalisation, le procédé de fabrication par moulage reste très simple et peu coûteux à mettre en oeuvre. D'autre part, la forme de l'élément d'occultation et les variations d'épaisseur peuvent être optimisées en fonction du maintien des éléments d'occultation en position déployée, de leur encombrement en position repliée mais également de façon à permettre leur empilement face à face deux à deux, ce qui permet un gain de place lors de leur stockage.

D'autres répartitions des zones de différentes épaisseurs pourront également être envisagées, ainsi que plus deux épaisseurs différentes en fonction de leur efficacité par rapport au galbe souhaité pour l'élément d'occultation.

D'une façon générale, dans les différents modes de réalisation décrits, l'élément d'occultation pourra présenter des prolongements adaptés le long de ses bords latéraux de façon que ceux-ci soient guidés et/ou maintenus dans des rails prévus à cet effet.

Un revêtement pourra être prévu et rapporté sur l'une et/ou l'autre des faces de l'élément d'occultation, notamment un Jersey (marque déposée) sur la face visible pour accorder le dispositif à la garniture intérieure du véhicule ou dans le cas de l'occultation du pavillon ou de la vitre arrière par exemple sur la face contre la vitre pourra être rapporté un revêtement atténuant, absorbant ou réfléchissant la lumière.

## Revendications

1. Dispositif d'occultation pour un véhicule automobile, mobile entre au moins deux positions, une position repliée et dans ladite position déployée,
**caractérisé en ce qu'**il comprend un élément d'occultation réalisé dans une même pièce de matériau souple choisi de façon que dans ladite position déployée ledit élément soit maintenu dans une forme prédéterminée, ledit matériau utilisé participant au maintien dudit élément d'occultation dans ladite position déployée.

2. Dispositif d'occultation selon la revendication 1, **caractérisé en ce que** ledit matériau est compressible.

3. Dispositif d'occultation selon la revendication 2, **caractérisé en ce que** ledit matériau compressible est de type mousse à cellules ouvertes.

4. Dispositif d'occultation selon l'une quelconque des revendications 2 et 3, **caractérisé en ce que** ledit matériau compressible est choisi parmi le polyuréthanne, le polypropylène et le polystyrène.

5. Dispositif d'occultation selon la revendication 1, **caractérisé en ce que** ledit matériau est incompressible.

6. Dispositif d'occultation selon la revendication 5, **caractérisé en ce que** ledit matériau incompressible est choisi parmi le choisi parmi le caoutchouc, le TPE (Thermo Plastique Elastomère) et l'EPDM (Ethylène Propylène Diène Monomère).

7. Dispositif d'occultation selon l'une quelconque des revendications 1 à 6, **caractérisé en ce que** ledit élément d'occultation présente une épaisseur uniforme dans ladite position déployée.

8. Dispositif d'occultation selon l'une quelconque des revendications 1 à 6, **caractérisé en ce que** ledit élément d'occultation comprend au moins deux zones ayant des épaisseurs différentes dans ladite position déployée.

9. Dispositif d'occultation selon la revendication 8, **caractérisé en ce que** ledit élément d'occultation comprend des zones longitudinales de première épaisseur prédéterminée, et des zones longitudinales de deuxième épaisseur prédéterminée dans ladite position déployée.

10. Dispositif d'occultation selon la revendication 9, **caractérisé en ce que** ladite première épaisseur prédéterminée est supérieure à ladite deuxième épaisseur prédéterminée dans ladite position déployée.

11. Dispositif d'occultation selon la revendication 10, **caractérisé en ce que** lesdites zones longitudinales de première épaisseur prédéterminée et lesdites zones longitudinales de deuxième épaisseur prédéterminée sont alternées dans ladite position déployée.

12. Dispositif d'occultation selon la revendication 11, **caractérisé en ce que** ladite alternance est régulière dans ladite position déployée.

13. Dispositif d'occultation selon l'une quelconque des revendications 10 à 12, **caractérisé en ce que** lesdites zones longitudinales de première épaisseur prédéterminée et lesdites zones longitudinales de deuxième épaisseur prédéterminées sont reliées par des zones d'épaisseur transitoire dans ladite position déployée.

14. Dispositif d'occultation selon l'une quelconque des revendications 1 à 13, **caractérisé en ce que** ledit élément d'occultation est réalisé par moulage.

15. Dispositif d'occultation selon l'une quelconque des revendications 1 à 14, **caractérisé en ce que** ledit élément d'occultation est monté sur un tube enrouleur.

16. Dispositif d'occultation selon la revendication 15, **caractérisé en ce qu'**il comprend des moyens pour comprimer ledit élément d'occultation avant l'enroulement.

17. Dispositif d'occultation selon l'une quelconque des revendications 10 à 16, **caractérisé en ce que** lesdites zones longitudinales de première épaisseur sont suffisamment espacées les unes des autres par lesdites zones longitudinales de deuxième épaisseur pour s'aplatir indépendamment les unes des autres lors du repliement.

18. Dispositif d'occultation selon l'une quelconque des revendications 1 à 17, **caractérisé en ce que** l'élément d'occultation est destiné à occulter un pavillon ou une partie d'un pavillon.

19. Véhicule automobile, **caractérisé en ce qu'**il comprend au moins un dispositif d'occultation mobile entre au moins deux positions, une position repliée et une position déployée, ledit dispositif comprenant un élément d'occultation réalisé dans une même pièce de matériau souple choisi de façon que dans ladite position déployée ledit élément soit maintenu dans une forme prédéterminée, ledit matériau utilisé participant au maintien dudit élément d'occultation dans ladite position déployée.

20. Véhicule automobile selon la revendication 19, **caractérisé en ce que** ledit dispositif d'occultation s'étend au moins partiellement en regard du pavillon.
